# EUROPÄISCHE PATENTSCHRIFT

(11) **EP 0 560 834 B1**
(45) Veröffentlichungstag und Bekanntmachung des Hinweises auf die Patenterteilung: **17.08.1994**
(21) Anmeldenummer: 92900109.7
(22) Anmeldetag: 04.12.1991
(51) Int. Cl.: C21C 5/52, C21C 7/072, B22D 1/00, F27D 3/16

(54) **BODEN- ODER WANDAUSBILDUNG FÜR EIN METALLURGISCHES GEFÄSS**
BOTTOM OR WALL STRUCTURE FOR A METALLURGICAL VESSEL
STRUCTURE DU FOND OU DES PAROIS DE RECIPIENTS METALLURGIQUES

(30) Priorität: 07.12.1990 AT 2483/90; 02.02.1991 DE 4103156
(43) Veröffentlichungstag der Anmeldung: 22.09.1993
(73) Patentinhaber: VEITSCH-RADEX AKTIENGESELLSCHAFT FÜR FEUERFESTE ERZEUGNISSE, A-1040 Wien (AT)
(72) Erfinder: RINNHOFER, Johann, A-1150 Wien (AT); SCHMIDBERGER, Robert, A-8793 Trofaiach (AT); PAWLISKA, Volker, A-9872 Millstatt (AT); CAPPELLI, Giorgio, I-20089 Basiglio (IT)
(74) Vertreter: Becker, Thomas, Dr., Dipl.-Ing.
(86) Internationale Anmeldenummer: EP9102305
(87) Internationale Veröffentlichungsnummer: WO9210593

(56) Entgegenhaltungen:
- DE-C- 3 619 533
- DE-C- 3 742 861
- DE-C- 3 926 786
- DE-U- 9 004 945
- FR-A- 2 451 945
- Soviet Inventions Illustrated section m/p, week 7945, 19 Dec 1979; Derwent Publications Ltd, London,GB

## Beschreibung

Die Erfindung betrifft eine Boden- oder Wandausbildung für ein metallurgisches Gefäß mit einer, einem äußeren Metallmantel des Gefäßes benachbarten feuerfesten Auskleidung, die auf der dem Metallmantel abgewandten Seite ein Verschleißfutter aufweist, das zumindest abschnittweise gasdurchlässig ist und mit seinem gasdurchlässigen Abschnitt mindestens eine Gasspüleinrichtung mit einer zugehörigen Gaszuführleitung überdeckt.

Eine solche Bodenausbildung ist aus der DE 37 42 861 C1 bekannt. Im Bereich eines feuerfesten Dauerfutters befindet sich eine Durchgangsöffnung, innerhalb der ein metallisches Röhrchen angeordnet ist, das über einen Mörtel in der Durchgangsöffnung festgelegt wird. Unmittelbar oberhalb dieser Durchgangsöffnung ist im Verschleißfutter ein metallisches Leitblech angeordnet, dessen Fläche wesentlich größer ist als die Querschnittsfläche der Durchgangsöffnung, so daß über das Röhrchen eingespültes Gas zunächst den genannten Mörtel und danach einen ersten Abschnitt des gasdurchlässigen Verschleißfutters durchströmt, bevor es - durch das Leitblech seitlich abgelenkt - um die Außenkanten des Leitblechs herum durch das poröse Verschleißmaterial weiter in die Metallschmelze diffundiert.

Die bekannte Bodenzustellung ist für einen Elektro-Lichtbogenofen vorgesehen und soll neben einer hohen Lebensdauer vor allem ein auf eine große Fläche verteiltes Einleiten des Spülgases in die Metallschmelze zur Ausbildung eines großen Spülflecks ermöglichen, um ein gleichmäßiges und ruhiges Brennen der Lichtbögen sicherzustellen.

Durch die seitliche Umlenkung des Behandlungsgases - in einer Ebene, im wesentlichen parallel zum Dauer- beziehungsweise Verschleißfutter - wird die Gasströmung gezielt seitlich umgelenkt, mit der Folge, daß das Gas zumindest teilweise seitlich diffundiert und durch das Dauerfutter nach außen austritt.

Durch eine Gasspülsteinrichtung soll generell der Schmelzvorgang im metallurgischen Gefäß erleichtert, die Entkohlungsgeschwindigkeit erhöht und die Schmelzenergie reduziert werden.

Aus der DE 39 01 926 C1 ist eine Gasspülvorrichtung bekannt, bei der der Spülkegel vollständig innerhalb des Dauerfutters liegt und anstelle eines Verschleißfutters eine endliche Verschleißhaube aus feuerfestem Material oberhalb der gasaustrittseitigen Stirnfläche der Spülvorrichtung angeordnet wird, wobei die Verschleißhaube etwa die Form einer Halbkugel aufweist und gasdurchlässig beziehungsweise mit einem gasdurchlässigen Einsatz ausgebildet ist. Auch hier kommt es zu einer Diffusion der Gasströmung in die Verschleißhaube und damit einer Verteilung des zugeführten Gases mit der Folge einer verringerten Gasströmung, eines vergrößerten Spülflecks und einer nur noch bedingten Möglichkeit der Umwälzung der Metallschmelze.

Der Erfindung liegt insoweit die Aufgabe zugrunde, eine möglichst über längere Zeit einsetzbare Boden- oder Wandausbildung der gattungsgemäßen Art anzubieten, die eine Diffusion und insbesondere einen Verlust des Spülgases soweit wie möglich verhindert oder anders ausgedrückt: die eine gezielte, steuerbare Zuführung auch größerer Mengen des Behandlungsgases in die Metallschmelze über eine möglichst große Fläche gewährleistet. Dabei soll es möglich sein, den Gasfluß zu unterbrechen und wieder einzuschalten.

Der Erfindung liegt die Erkenntnis zugrunde, daß diese Aufgabe durch eine gezielte Führung des Behandlungsgases auch außerhalb der eigentlichen Gasspüleinrichtung (Gasverteilungseinrichtung) gelöst werden kann. Mit anderen Worten: die Erfindung schlägt Maßnahmen zur Lenkung des Behandlungsgases auch in dem Bereich zwischen der Gasaustrittseite der Gasspüleinrichtung und dem Eintritt in die Metallschmelze vor.

Hierzu weist eine gattungsgemäße Boden- oder Wandausbildung in ihrer allgemeinsten Ausführungsform folgende Merkmale auf:
- Die Spüleinrichtung ist umfangsseitig und gegebenenfalls bodenseitig von einer gasdichten Aufnahme umgeben,
- die Aufnahme überragt die Gasspüleinrichtung nach oben bis in den Bereich des Verschleißfutters.
- der von der Aufnahme umgriffene Bereich des gasdurchlässigen Verschleißfutters ist frei von Leitblechen.

Auf diese Weise wird quasi in Verlängerung der Gasspüleinrichtung beziehungsweise des Spülstrahles eine "Führung" für das Spülgas bereitgestellt, die aus einer dichten, feuerfesten keramischen Masse, einer dichten, feuerfesten Hülse, einer dichten, temperaturbeständigen Fasermatte und/oder einem dichten, metallischen Bauteil einzeln oder. in Kombination bestehen kann, so daß seitliche und rückwärtige Diffusionen des Spülgases sicher verhindert werden und das Spülgas nur noch - wie gewünscht - gezielt und in Verlängerung der Gaszuführung, jedoch über eine relativ große Fläche durch das Verschleißfutter hindurch in die Metallschmelze eintreten kann.

Üblicherweise weisen Gasspüleinrichtungen einen runden, gelegentlich aber auch einen quadratischen oder rechteckigen Querschnitt auf. Sofern nachstehend die Begriffe "zylinderförmig", "ringförmig" oder dergleichen verwendet werden, so beziehen sich diese Begriffe auf sämtliche Arten von Querschnittsformen.

Wenn also nach einer vorteilhaften Ausführungsform vorgeschlagen wird, die Aufnahme aus einem zylinderförmigen feuerfesten Bauteil zu bilden, so kann dieses zylinderförmige Bauteil sowohl einen runden, aber auch einen quadratischen, rechteckigen oder zum Beispiel achteckförmigen Querschnitt aufweisen. In der Regel wird man die Querschnittsform der Aufnahme der der Gasspüleinrichtung anpassen. Dies ist aber nicht zwingend notwendig. Entscheidend ist, daß die Aufnahme quasi in Verlängerung der Gasspüleinrichtung eine Führung für das zugeführte Behandlungsgas bereitstellt. Verschiedene konkrete Ausführungsformen werden nachstehend noch beschrieben.

Um die Sicherheit gegen eine seitliche Diffusion des Behandlungsgases zu erhöhen und damit einen Verlust des Spülgases zu vermeiden, kann als zusätzliche Maßnahme vorgesehen werden, die Aufnahme umfangsseitig mit einer dichten feuerfesten Masse zu hinterfüttern, die dann zwischen dem Dauer- und dem Verschleißfutter verläuft. In der Regel wird diese dichte feuerfeste Masse also die Form einer Ringscheibe haben, die zwischen Dauerfutter und Verschleißfutter um die Aufnahme herum angeordnet ist. Auf diese Weise wird vor allem ein Verlust des Spülgases über den Panzer (den Metallmantel) des Ofens verhindert, und zwar auch dann, falls das Spülgas über den Rand der beschriebenen Aufnahme hinweg einmal rückwärts in Richtung auf das Dauerfutter diffundieren sollte, was allerdings durch die beschriebene Aufnahme weitestgehend ausgeschlossen ist.

Die dichte feuerfeste Masse soll dabei (in Richtung der Gasströmung betrachtet) etwa dem 0,1 bis 0,5-fachen der Höhe der Gasspüleinrichtung entsprechen. Sie ist damit dick genug, um eine Gasdiffusion zu verhindern.

Ihre Breite (radial zur Richtung der Gasströmung betrachtet) wird vorzugsweise so gewählt, daß sie dem 0,5 bis 5-fachen der Gasspüleinrichtung entspricht. Damit umgibt die Masse die Gasspüleinrichtung beziehungsweise die Aufnahme in einem so großen Bereich, der ausreicht, auch im Extremfall eine seitliche Gasdiffusion zu unterbinden.

Für besondere Anwendungsbereiche kann eine zusätzliche Sicherheit dadurch geschaffen werden, daß auch die feuerfeste Masse umfangsseitig noch einmal von einem gasdichten feuerfesten Ring begrenzt wird, der sich, ausgehend vom Dauerfutter, an der dichten feuerfesten Masse vorbei über die Aufnahme hinaus in das Verschleißfutter erstreckt, und zwar bis kurz vor dem Kontaktbereich zur Metallschmelze. Auf diese Weise wird quasi eine "zweite Wanne" um die Gasspüleinrichtung gelegt.

In einer alternativen Ausführungsform wird vorgesehen, die Gasspüleinrichtung am oberen (der Metallschmelze zugewandten) Ende zunächst umfangsseitig mit einer dichten feuerfesten Masse zu hinterfüttern, die dabei zwischen dem Dauer- und Verschleißfutter verläuft, an die sich dann umfangsseitig die gasdichte Aufnahme oder ein gasdichter Ring der vorstehend beschriebenen Art anschließen, die sich vom Dauerfutter weit in das Verschleißfutter hinein bis kurz vor dessen Oberfläche erstrecken. Diese Einrichtungen können selbst wieder mit einer dichten feuerfesten Masse hinterfüttert werden.

Bei dieser Ausführungsform wird die Gasströmung also nicht unmittelbar in Verlängerung der Gasspüleinrichtung vertikal in die Metallschmelze geführt, sondern es ist möglich, daß ein Teil der Gasblasen etwas seitlich durch das poröse feuerfeste Verschleißfutter hindurch seitlich diffundiert, bevor es auf die gasdichte Aufnahme/den gasdichten Ring trifft und dann in Richtung auf die Metallschmelze nach oben umgelenkt wird. Aber auch bei dieser Ausführungsform ist aufgrund der dichten feuerfesten Masse zwischen der Gasspüleinrichtung und der Umhüllung sichergestellt, daß eine seitliche und rückwärtige Diffusion über das Dauerfutter beziehungsweise den Panzer des Ofens hinaus absolut sicher verhindert wird. Auch bei dieser Ausführungsform geht also kein Spülgas verloren, der Spülfleck wird jedoch - in Abhängigkeit von der Breite der dichten feuerfesten Masse - vergrößert.

Der vorzugsweise aus Metall oder feuerfester Keramik bestehende Ring kann ebenso wie die aus gleichen Werkstoffen herstellbare Aufnahme ein- oder mehrteilig sein. Bevorzugt ist eine einteilige, monolithische Bauform, so daß die Aufnahme/der Ring als Fertigbauteil eingesetzt werden kann. Ebenso ist es aber auch möglich, die Aufnahme beziehungsweise den Ring aus diskreten Elementen zu konfektionieren. Stets wird dabei sichergestellt, daß die Umhüllung insgesamt für das Spülgas undurchlässig ist.

Die Aufnahme beziehungsweise der feuerfeste Ring können sich etwa über 2/3 der Dicke (Höhe) des Verschleißfutters in dieses hinein erstrecken. Grundsätzlich wäre eine weitere Verlängerung der Aufnahme/des Rings in Richtung auf die Metallschmelze möglich. Durch die Begrenzung der Höhe wird jedoch auch bei einer Erosion des Verschleißfutters eine weitere konstante Gaszufuhr ermöglicht und - bei Verwendung einer metallischen Umhüllung - ein Abbrand verhindert.

Die dichte feuerfeste Masse, die dichte feuerfeste Aufnahme und der dichte feuerfeste Ring können aus unterschiedlichen keramischen Sorten hergestellt werden. Es bieten sich insbesondere chemisch oder zum Beispiel mittels Pech oder Teer gebundene keramische Sorten an. Dabei werden magnesitische Sorten insbesondere für den Anwendungsbereich in einem Elektro-Lichtbogenofen bevorzugt.

Für die dichte feuerfeste Masse bietet sich vor allem eine Masse auf Basis eisenarmer Magnesia an, deren MgO-Gehalt über 90 Gew.-% und deren Körnung kleiner 2 mm, vorzugsweise 1 mm beträgt.

Für die dichte feuerfeste Aufnahme werden ebenfalls eisenarme, pech- oder teergebundene Magnesia-Qualitäten bevorzugt.

Um den Gasdurchtritt durch das Verschleißfutter zu optimieren, sieht die Erfindung in einer vorteilhaften Ausführungsform vor, den unmittelbar oberhalb der Gasspüleinrichtung verlaufenden Abschnitt des Verschleißfutters aus einer gröberen Körnung als das übrige Verschleißfutter auszuwählen, die vorzugsweise auch nach Versinterung/Verfrittung noch ein offenes Porennetz aufweist.

Beispielhaft seien trockene Herdstampfmassen aus alpiner Sintermagnesia genannt, deren MgO-Gehalt über 50 Gew.-%, bevorzugt zwischen 70 und 90 Gew.-%, und deren CaO-Gehalt zwischen 8 und 15 Gew.-% liegt. Die hier verwendete Körnung sollte etwa im Bereich 3 bis 8 mm liegen, und zwar bei weitestgehendem Verzicht auf eine Feinfraktion. Die benachbarte Herdmasse (Verschleißfutter) kann aus derselben Sorte bestehen, jedoch mit Feinanteil beziehungsweise in feinerer Fraktion insgesamt.

Die Gasspüleinrichtung kann auf unterschiedlichste Art und Weise gestaltet werden. Nach einer ersten Ausführungsform wird eine Gasspüleinrichtung mit gerichteter Porosität vorgeschlagen, die eine gezielte Zuführung des Behandlungsgases ermöglicht.

Gasspüleinrichtungen mit gerichterer Porosität, wie sie hier verwendet werden können, sind im einzelnen in der Radex-Rundschau 1986, 203 und 1988, 481 beschrieben.

Darüber hinaus ist in einer Ausführungsvariante vorgesehen, daß der Gasspülstein einen, von einem Rohr gebildeten axialen mittigen Gaskanal und ein, das Rohr im Abstand umgreifendes äußeres Rohr aufweist, wobei die Rohre unter Ausbildung eines zwischen ihnen verlaufenden Ringspaltes lagepositioniert sind. Dabei können das innere Rohr beziehungsweise der Ringspalt auch an getrennte Gaszuführleitungen angeschlossen werden. Auf diese Weise ist es möglich, auch unterschiedliche Gase zuzuführen.

In einer Ausführungsvariante soll der vorstehend beschriebene Gasspülstein so gestaltet sein, daß er mit einer Vielzahl von im wesentlichen parallel zu den Rohren verlaufenden Durchgangskanälen durch das Matrixmaterial des Spülsteins ausgebildet ist, die statistisch um die Rohre herum verteilt verlaufen und an der, der Metallschmelze abgewandten Seite in eine Gasverteilkammer münden, wobei die Gasverteilkammer, der Ringkanal und der durch das Rohr gebildete Gaskanal gegeneinander abgedichtet und an getrennte Gaszuführleitungen anschließbar sind.

Die Gasspüleinrichtung kann aber auch ganz anders ausgebildet werden.

In diesem Fall besteht die Gasspüleinrichtung aus einer Gasverteilungsvorrichtung, die gegen das Dauerfutter beziehungsweise gegen den metallischen Mantel des Gefäßes und gegen die seitliche Gefäßwandung gasdicht abgeschirmt ist. Hierbei kann die Aufnahme (die Abschirmung) auch durch ein Blech gebildet werden, welches sich analog bis in den Bereich des Verschleißfutters, gegebenenfalls bis kurz vor den Bereich der anschließenden Metallschmelze hinein erstreckt. Die Aufnahme ist hierbei vorzugsweise auch bodenseitig herumgezogen, wobei die Gaszuführleitung in den Bodenabschnitt einmündet. Dabei kann die bodenseitige Abschirmung auch durch den Ofenmantel selbst gebildet werden.

Bei dieser Ausführungsform wird die Gasverteilungsvorrichtung mit einer Vielzahl von Gasaustrittsöffnungen ausgebildet, die sich dann über einen weiten Bereich des Herdes verteilt erstrecken. Auf diese Weise können die Spülgase zuverlässig und gezielt über einen weiten Bereich des Herdes eingedüst werden. Dabei ist die Gasstromdichte, also der Volumenstrom pro Flächeneinheit beim Übertritt in das Verschleißfutter (die Herdmasse) auch bei größeren Gasmengen relativ gering. Die Verteilung des Gases ist dagegen sehr gleichmäßig, so daß es nicht mehr zur Ausbildung von unerwünschten Spülflecken an der Oberfläche des metallurgischen Bades kommt.

Gleichzeitig erfolgt eine Kühlung des Verschleißfutters, wodurch dessen Verschleiß verringert wird. Damit können große Bereiche des Verschleißfutters gleichzeitig geschützt werden. Die Standzeit des Verschleißfutters verlängert sich erheblich. Im Bedarfsfall können Verschleißbereiche im Herd des metallurgischen Gefäßes dosiert gekühlt werden, indem man die Gasstromdichte in diesen Bereichen entsprechend erhöht.

Die Gasspüleinrichtung (Gasverteilungsvorrichtung) kann als Rohrsystem mit einer Vielzahl von Gasaustrittsöffnungen ausgebildet werden. Die nachstehende Figurenbeschreibung, die insoweit auch allgemeingültige Merkmale enthält, beschreibt diese Ausführungsform im einzelnen. Für die Ausbildung und Anordnung der Rohre stehen eine Vielzahl von Möglichkeiten zur Verfügung. So kann der rohrförmige Gasspülkörper parallel zum metallischen Mantel des metallurgischen Gefäßes ausgerichtet werden. Er ist dann vorzugsweise auf der oberen Hälfte seiner Umfangsfläche mit den Gasaustrittsöffnungen ausgebildet.

In einer anderen Ausführungsform wird vorgeschlagen, die Gasverteileinrichtung als großflächigen Hohlkasten mit einer Vielzahl von Gasaustrittsöffnungen an der oberen Stirnfläche auszubilden. Hierbei können die Gasspüleinrichtung und die gasdichte Aufnahme aus einem Teil bestehen. Auch bei dieser Ausführungsform kann der spültechnisch wirksame Flächenabschnitt zusätzlich erhöht werden.

Um eine mechanische und/oder thermische Beschädigung der Gasspüleinrichtung zu vermeiden, schlägt eine weitere Ausführungsform vor, die Gasverteileinrichtung mit einer grobkörnigen Schüttmasse zu füllen. In diesem Fall wird zum Beispiel der Rohrkörper oder Hohlkasten mit einer entsprechenden grobkörnigen feuerfesten Masse gefüllt. Hierdurch wird gleichzeitig eine Art Durchbruchsicherung für etwaig eindringende Metallschmelze bereitgestellt.

Insbesondere die letztgenannten Ausführungsformen der Gasspüleinrichtung (Gasverteilungsvorrichtung) ermöglichen es, sie direkt auf dem Stahlmantel des metallurgischen Gefäßes aufzubringen. Insbesondere im Fall einer metallischen Aufnahme kann der Stahlmantel des metallurgischen Gefäßes dabei gleichzeitig als bodenseitige Abdeckung dienen.

Im übrigen lassen sich auch bei dieser Ausführungsform die vorstehend beschriebenen Ausgestaltungsformen der Bodenzustellung durchführen.

Die beschriebene Bodenzustellung läßt sich in besonders vorteilhafter Weise in einem Elektro-Lichtbogenofen realisieren, wo eine gezielte und kontrollierbare Umwälzung der Metallschmelze besondere Bedeutung hat.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher beschrieben, wobei diese Beschreibungen auch allgemein für die Erfindung wesentliche Merkmale enthalten.

Dabei zeigt die Zeichnung, jeweils in stark schematisierter Darstellung, in
- Figur 1:: einen Schnitt durch eine Bodenzustellung in einem Elektro-Lichtbogenofen in einer ersten Ausführungsform mit einer keramischen, feuerfesten Aufnahme,
- Figuren 2 - 7:: perspektivische Teilansichten, teilweise geschnitten, weiterer Ausführungsformen der Bodenzustellung für ein metallurgisches Gefäß,
- Figuren 8 - 11:: Aufsichten auf den Herd eines Elektroofens mit verschiedenen Ausführungsformen von Gasspüleinrichtungen in Rohrform.

In den Figuren sind gleiche oder gleichwirkende Bauteile mit gleichen Bezugsziffern dargestellt.

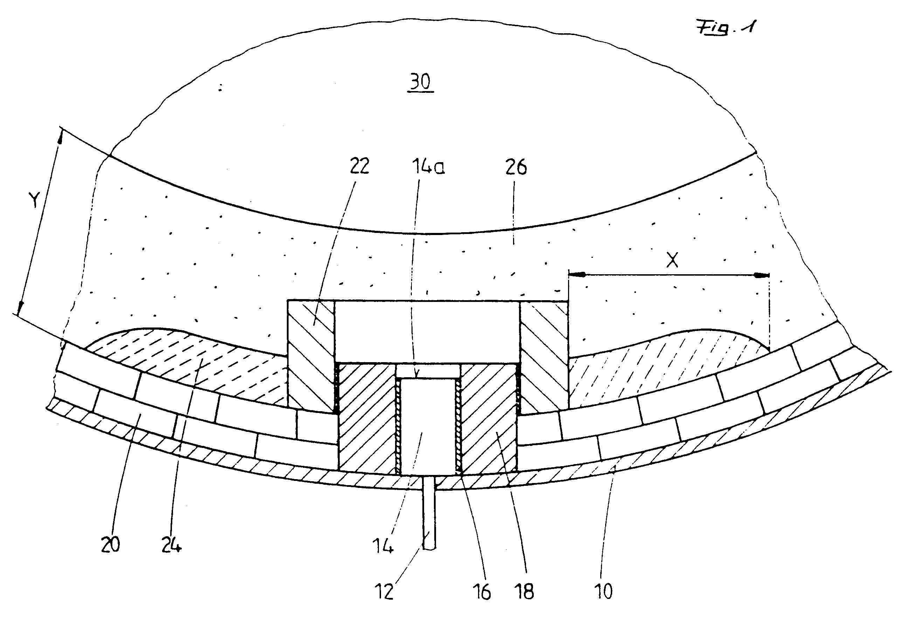

In Figur 1 ist der Panzer (Metallmantel) 10 eines Elektro-Lichtbogenofens zu erkennen. Durch den Metallmantel 10 ragt ein Gaszuführrohr 12 für eine allgemein mit dem Bezugszeichen 14 gekennzeichnete Gasspüleinrichtung, die mit gerichteten Poren (nicht dargestellt) ausgebildet ist, die durch Röhrchen gebildet werden, die in entsprechenden Durchbohrungen des keramischen Matrixmaterials einliegen und von einem - ebenfalls nicht dargestellten - Gassammelraum im unteren Bereich der Gasspüleinrichtung mit Gas versorgt werden, das dann über die Stirnfläche 14a austritt, was nachstehend noch näher beschrieben wird.

Die Gasspüleinrichtung 14 ist über eine gasdichte Mörtelschicht 16 in einer Aufnahme 18 positioniert, die ebenfalls aus einem gasdichten keramischen Material besteht. Wie die Figur zeigt, überragt die Aufnahme 18 die Gasspüleinrichtung 14 nach oben.

Umfangsseitig schließt sich an die Aufnahme 18, benachbart zum Metallmantel 10, ein Dauerfutter 20 an, das aus üblichen - nicht gasdichten - Steinen besteht. Die Dicke des Dauerfutters 20 entspricht hier etwa der Hälfte der Höhe der Aufnahme 18.

Im oberen Teil wird die Aufnahme 18 von einem dichten feuerfesten keramischen Ring 22 umgeben, der im übrigen auf dem Dauerfutter 20 aufsitzt und die Aufnahme 18 nach oben deutlich überragt, was nachstehend noch näher beschrieben wird.

Der Ring 22 und die Aufnahme 18 sind wiederum über einen gasdichten feuerfesten Mörtel miteinander verbunden.

Schließlich zeigt die Figur eine dichte feuerfeste, pechgebundene Magnesia-Masse 24, die sich umfangsseitig an das untere Ende des Rings 22 anschließt und dort über eine gewisse Strecke "x" verläuft und schließlich in Richtung auf das Dauerfutter 20 ausläuft.

Ein Verschleißfutter 26 liegt auf dem Dauerfutter 20, der Masse 24, dem Ring 22, der Aufnahme 18 beziehungsweise der Gasspüleinrichtung 14 auf und bildet so eine zweite, obere Deckschicht der feuerfesten Bodenzustellung.

Die Dicke der Verschleißschicht ist mit "y" gekennzeichnet.

Die Verschleißschicht 26 ist aus zwei unterschiedlichen Qualitäten aufgebaut, und zwar oberhalb der Gasspüleinrichtung 14 aus einer grobkörnigen (4 bis 8 mm) und im übrigen Bereich aus einer feinkörnigen (kleiner 4 mm) Sorte mit einem MgO-Gehalt von 82 Gew.-% und einem CaO-Gehalt von 12 Gew.-%.

Wie die Figur erkennen läßt, erstreckt sich die Aufnahme 18 etwa über die Hälfte der Höhe der gesamten Bodenzustellung und der Ring 22 etwa über 2/3 der Höhe des Verschleißfutters 26.

Das über die Gasspüleinrichtung 14 zugeführte Gas wird nun gezielt durch die gröbere Fraktion der Herdmasse 26 in die allgemein mit dem Bezugszeichen 30 symbolisierte Metallschmelze eingedüst, wobei sich eine gezielte Führung der Gasströmung aufgrund der Anordnung der Aufnahme 18 und des Ringes 22 ergibt, durch die das Gas nicht hindurchdiffundieren kann. Sollte es aber doch einmal dazu kommen, daß einzelne Gasblasen über die obere Kante des Rings 22 hinaus seitlich diffundieren, so wird ein Gasverlust aufgrund der sich anschließenden dichten feuerfesten keramischen Masse 22 zusätzlich behindert.

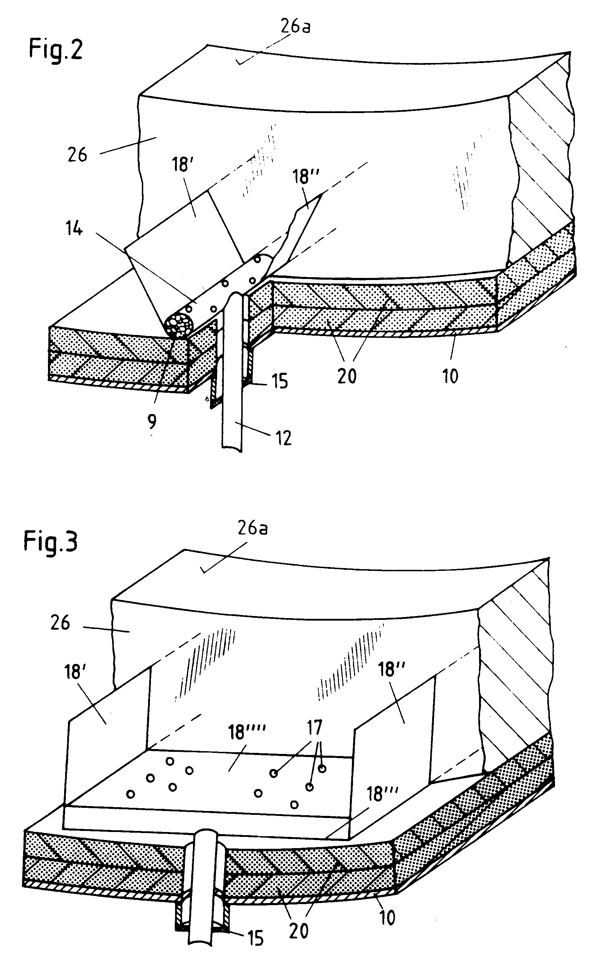

Bei der in Figur 2 dargestellten Ausführungsvariante ist auf dem Stahlmantel 10 des Gefäßes in üblicher Weise das Sicherheits- oder Dauerfutter 20 aufgebracht. Auf diesem liegt die Gasspüleinrichtung (Gas-Verteilungsvorrichtung) 14 auf, die hier als Rohrsystem ausgebildet ist. Die Verteilungsvorrichtung 14 wird über eine Gaszuführleitung 12 versorgt, die an ihrem Durchtritt durch den Stahlmantel 10 mit einem Dichtstutzen 15 versehen ist. Die Verteilungsvorrichtung 14 ist mit einer grobkörnigen, feuerfesten, keramischen Schüttmasse 9 gefüllt, hier mit einer grobkörnigen Magnesiamasse. Das Rohr, das die Verteilungsvorrichtung 14 bildet, ist an seiner Oberseite mit einer Vielzahl von Gasaustrittsöffnungen 17 versehen.

Die Verteilungsvorrichtung 14 ist in der Schicht 26 aus einer gasdurchlässigen Herdbaumasse eingebettet, deren Oberfläche 26a dem Gefäßinneren (der Metallschmelze) zugewandt ist. Beiderseits der Verteilungsvorrichtung 14 sind als Bleche ausgebildete Abschirmungen 18′, 18˝ schräg nach oben angeordnet zu erkennen, die die Aufgabe der Aufnahme 18 nach Figur 1 erfüllen und das Eindringen der Gase in das Dauerfutter 20 verhindern. Es ist offensichtlich, daß die Bleche 18′, 18˝ an ihren seitlichen Enden über Verbindungsbleche gasdicht miteinander verbunden sind, um so auch eine Gasdiffusion in dieser Richtung zu unterbinden.

In Figur 3 ist eine kastenförmige Verteilungsvorrichtung 14 auf dem Dauerfutter 20 aufgesetzt. Sie besteht aus einem Bodenblech 18‴, in welches das Gaszuführrohr 12 einmündet, einem im Abstand darüber angeordneten weiteren Blech 18˝˝ und vier seitlichen, nach oben verlängerten Abschirmblechen, von denen die Bleche 18′, 18˝ in der Figur zu erkennen sind. So ergibt sich insgesamt ein gasdichter Hohlkasten, der seitlich nach oben mit Blechen in das Verschleißfutter 26 verlängert ist, wobei die Gase durch eine Vielzahl von Öffnungen 17 im Abdeckblech 18˝˝ ausströmen können.

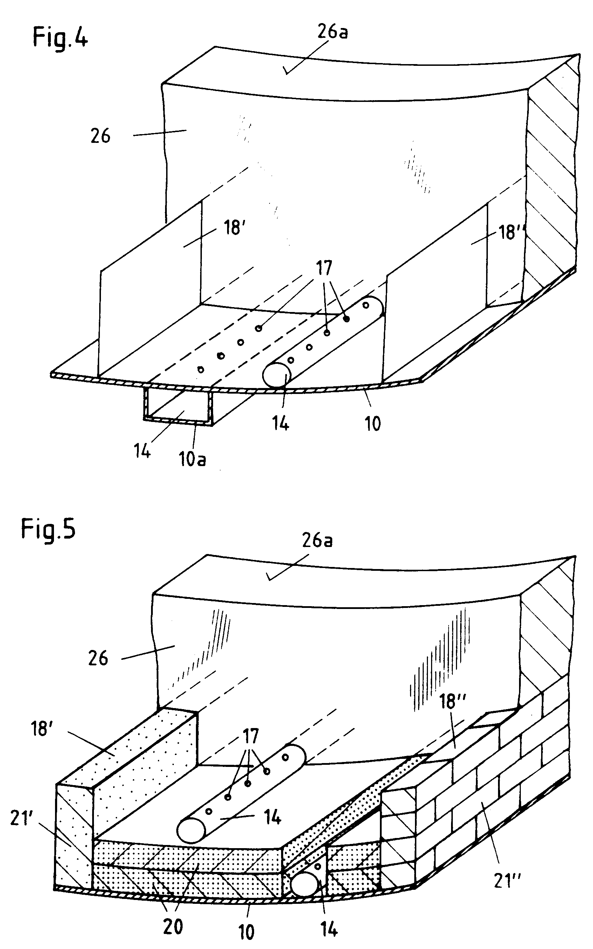

Das Ausführungsbeispiel nach Figur 4 stellt eine Kombination der Ausführungsformen nach den Figuren 2, 3 dar. Die rohrförmige Gasverteilungsvorrichtung 14 ist hierbei direkt auf dem Stahlmantel 10 fixiert (verschweißt) und die seitlichen Abschirmbleche, von denen der besseren Übersichtlichkeit halber nur die Bleche 18′, 18˝ dargestellt sind, verlaufen seitlich im Abstand zur Gasverteilvorrichtung 14 vom Blechmantel 10 vertikal nach oben in das Verschleißfutter 26.

Figur 4 zeigt eine weitere mögliche Ausführungsform, bei der die Gasverteilungsvorrichtung 14 im Stahlmantel 10 selbst ausgebildet ist, der dazu nach unten kastenförmig (10a) erweitert ist und in der korrespondierenden oberen Abdeckfläche zugehörige Gasaustrittsöffnungen 17 aufweist.

In Figur 5 sind zwei weitere Ausführungsformen der Bodenzustellung dargestellt. Eine erste, rohrförmige Gasverteilvorrichtung 14 ist analog dem Ausführungsbeispiel nach Figur 4 direkt am Stahlmantel 10 des metallurgischen Gefäßes angeordnet. Dazu weist das Dauerfutter 20 eine entsprechende Ausnehmung auf. Eine zweite, rohrförmige Gasverteilvorrichtung 14 liegt direkt auf dem Dauerfutter 20 auf. Beide werden gemeinsam von seitlichen, gasundurchlässigen Abschirmungen abgedeckt, die sich vertikal vom Stahlmantel 10 in das Verschleißfutter 26 hinein erstrecken. Zu erkennen sind hier zwei, gegenüberliegende Abschirmungen 18′, 18˝, wobei die Abschirmung 18′ aus einer gasundurchlässigen feuerfesten Masse 21′ und die Abschirmung 18˝ aus gemauerten, gasundurchlässigen feuerfesten Steinen 21˝ gebildet wird.

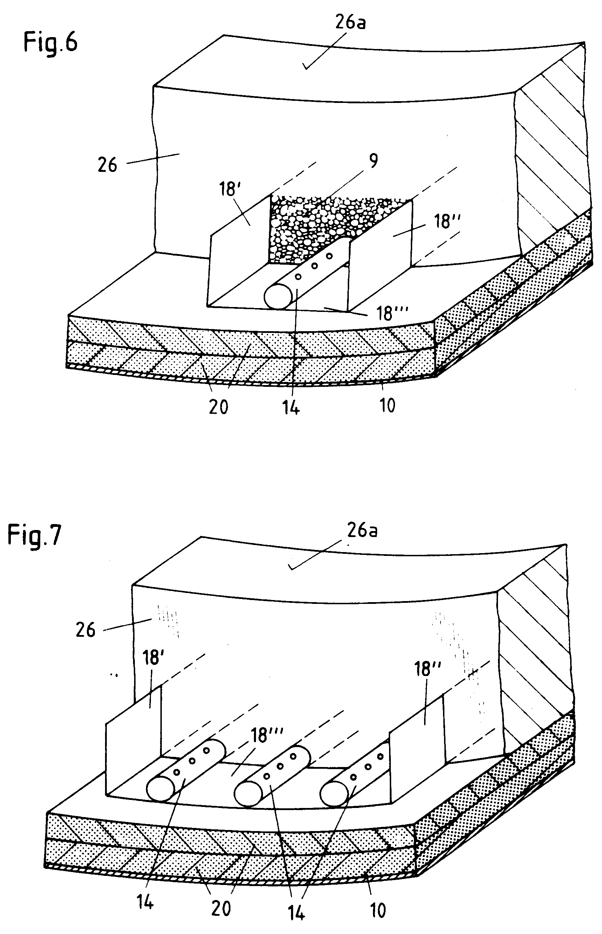

Beim Ausführungsbeispiel nach Figur 6 besteht die Abschirmung (Aufnahme) 18 aus zwei senkrecht zum Stahlmantel 10 verlaufenden Blechen 18′, 18˝ und einem diese verbindenden, auf dem Dauerfutter 20 aufliegenden Blech 18‴. Die rohrförmige Gasspüleinrichtung 14 liegt innerhalb des durch die Abschirmungen 18′, 18˝ gebildeten und durch zwei dazu senkrecht verlaufende, hier nicht dargestellte weitere Bleche komplettierten, nach oben hin offenen Kastens, der mit einer Schicht 9 aus einem grobkörnigen feuerfesten Material gefüllt ist. Die Schicht 9 wiederum ist vollständig von der Verschleißschicht 26 überdeckt, die auch außenseitig um die Aufnahme 18 herum auf dem Dauerfutter 20 verläuft.

In Figur 7 sind drei rohrförmige Gasverteilvorrichtungen 14 in einer kastenförmigen Aufnahme angeordnet, welche wiederum senkrecht zum Blechmantel 10 angeordnete Bleche 18′, 18˝ und ein dazwischen verlaufendes, auf dem Dauerfutter 20 aufliegendes Blech 18‴ umfaßt.

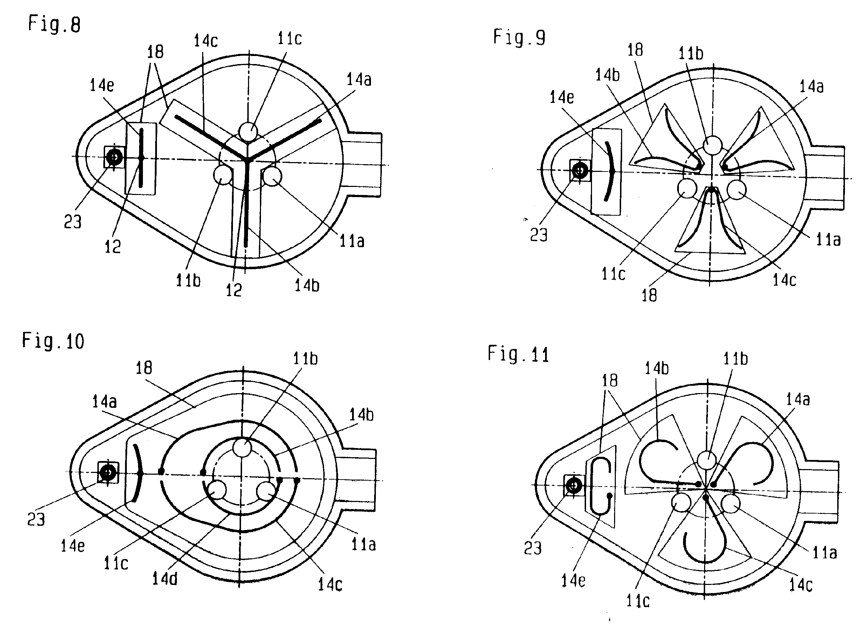

In den Figuren 8 bis 11 sind für einen Lichtbogenofen mit Elektroden 11a, 11b und 11c sowie exzentrischer Abstichöffnung 23 verschiedene Varianten der Anordnung der Gasverteilvorrichtung 14 dargestellt, die alle als Rohrsysteme ausgebildet sind. Die angedeuteten Abschirmungen 18 dichten die einzelnen Rohre beziehungsweise Rohrgruppen seitlich und nach unten ab.

In Figur 8 ist die Verteilungsvorrichtung 14 im Bereich der Elektroden 11a, 11b und 11c aus drei sternförmig um eine Gaszuführleitung 12 angeordneten Rohrabschnitten 14a, 14b und 14c sowie aus einem geradlinig vor der Abstichöffnung 23 angeordneten Rohrabschnitt 14e mit eigener Gaszuführleitung 12 zusammengesetzt.

Bei der Ausführungsvariante nach Figur 9 bestehen die Rohrabschnitte 14a, 14b und 14c aus jeweils zwei gekrümmten Armen.

In Figur 10 werden durch die halbkreisförmigen Rohrabschnitte 14a, 14b, 14c und 14d zwei konzentrische Kreise um die Mitte des Gefäßes gebildet.

Bei der Ausführungsform nach Figur 11 sind die Rohrabschnitte 14a, 14b und 14c gekrümmt gestaltet.

Die in der Nähe der Abstichöffnung 23 vorgesehenen Rohrabschnitte 14e haben jeweils die Aufgabe, während des Abstiches große Mengen an Spülgas einzubringen, wodurch ein schlackenfreier Abstich begünstigt wird.

Die Bodenzustellung erlaubt eine gezielte, regelbare Gaszuführung, die insbesondere für den Anwendungsbereich in einem Elektro-Lichtbogenofen von entscheidender Bedeutung ist. Eine unregelmäßige Gaszuführung könnte nämlich dazu führen, daß im Einzelfall die Bewegung des Metallbades so ungünstig beeinflußt wird, daß die Elektroden mit der Metallschmelze in Kontakt kommen (Kurzschlußgefahr!). Umgekehrt bestünde auch die Möglichkeit, daß die Gasströmung aufgrund seitlicher Diffusion sich so weit verringert, daß keine ausreichende Umwälzung der Metallschmelze mehr erreicht werden kann. Gleichzeitig können große Gasmengen eingedüst werden.

## Patentansprüche

1. Boden- oder Wandausbildung für ein metallurgisches Gefäß mit einer, einem äußeren Metallmantel (10) des Gefäßes benachbarten feuerfesten Auskleidung (20,26), die auf der dem Metallmantel (10) abgewandten Seite ein Verschleißfutter (26) aufweist, das zumindest abschnittweise gasdurchlässig ist und mit seinem gasdurchlässigen Abschnitt mindestens eine Gasspüleinrichtung (14, 14a-e) mit einer zugehörigen Gaszuführleitung (12) überdeckt,
**dadurch gekennzeichnet,**
daß die Gasspüleinrichtung (14, 14a-e) umfangsseit und gegebenenfalls bodenseitig von einer gasdichten Aufnahme (18, 18′, 18˝) umgeben ist, die die Gasspüleinrichtung (14, 14a-d) nach oben bis in den Bereich des Verschleißfutters (26) überragt, wobei der von der Aufnahme umgriffene Bereich des gasdurchlässigen Verschleißfutters frei von Leitblechen ist.

2. Boden- oder Wandausbildung nach Anspruch 1, bei der die Aufnahme (18, 18′, 18˝) aus einem kasten- oder zylinderförmigen Bauteil besteht, das in Richtung des Verschleißfutters (26) offen oder zumindest gasdurchlässig ist.

3. Boden- oder Wandausbildung nach Anspruch 1 oder 2, bei der die Aufnahme (18, 18′, 18˝) umfangsseitig von einer dichten feuerfesten Masse (24) umgeben ist, die zwischen einem Dauerfutter (20) und dem Verschleißfutter (26) der Auskleidung verläuft.

4. Boden- oder Wandausbildung nach Anspruch 3, bei der die Dicke der feuerfesten Masse (24) (in Richtung der Gasströmung betrachtet) dem 0,1 bis 0,5-fachen der Höhe der Gasspüleinrichtung (14, 14a-e) und die Breite der feuerfesten Masse (24) (radial zur Richtung der Gasströmung betrachtet) dem 0,5 bis 5-fachen der Höhe der Gasspüleinrichtung (14, 14a-e) entspricht.

5. Boden- oder Wandausbildung nach einem der Ansprüche 3 oder 4, bei der die feuerfeste Masse (24) umfangsseitig von einem gasdichten Ring begrenzt wird, der sich, ausgehend vom Dauerfutter, über die Aufnahme und die feuerfeste Masse hinaus in das Verschleißfutter erstreckt.

6. Boden- oder Wandausbildung nach einem der Ansprüche 1 bis 5, bei der zwischen der Gasspüleinrichtung und der Aufnahme eine dichte feuerfeste Masse vorgesehen ist, die zwischen dem Dauerfutter und dem Verschließfutter verläuft.

7. Boden- oder Wandausbildung nach einem der Ansprüche 1 bis 6, bei der die Aufnahme (18, 18′, 18˝) und/oder der Ring (22) aus einem monolithischen Bauteil besteht (bestehen).

8. Boden- oder Wandausbildung nach einem der Ansprüche 1 bis 6, bei der die Aufnahme (18, 18′, 18˝) und/oder der Ring (22) von einer aus diskreten feuerfesten Elementen konfektionierten Steinreihe gebildet wird (werden).

9. Boden- oder Wandausbildung nach einem der Ansprüche 1 bis 6, bei dem die Aufnahme (18, 18′, 18˝) und/oder der Ring (22) aus einem metallischen Werkstoff bestehen.

10. Boden- oder Wandausbildung nach einem der Ansprüche 5 bis 9, bei der sich die Aufnahme (18, 18′, 18˝) und/oder der Ring (22) bis zu 2/3 der Dicke des Verschleißfutters (26) in dieses hinein erstrecken.

11. Boden- oder Wandausbildung nach einem der Ansprüche 1 bis 10, bei der die Masse (24), die Aufnahme (18, 18′, 18˝) und/oder der Ring (22) aus einer chemisch oder kohlenstoff-gebundenen keramischen Qualität besteht (bestehen).

12. Boden- oder Wandausbildung nach Anspruch 11, bei der die Masse (24), die Aufnahme (18, 18′, 18˝) und/oder der Ring (22) aus einer pech- oder teergebundenen keramischen Qualität besteht (bestehen).

13. Boden- oder Wandausbildung nach einem der Ansprüche 1 bis 12, bei der die Masse (24), die Aufnahme (18, 18′, 18˝) und/oder der Ring (22) aus einer magnesitischen Qualität besteht (bestehen).

14. Boden- oder Wandausbildung nach einem der Ansprüche 1 bis 13, bei der das Dauerfutter (20) aus Magnesit besteht.

15. Boden- oder Wandausbildung nach einem der Ansprüche 1 bis 14, bei der das Verschleißfutter (26) aus einer trockenen Stampfmasse aus Sintermagnesia mit einem MgO-Gehalt über 50 Gew.-% besteht.

16. Boden- oder Wandausbildung nach einem der Ansprüche 1 bis 15, bei der der unmittelbar oberhalb der Gasspüleinrichtung (14, 14a-e) verlaufende Abschnitt des Verschleißfutters (26) aus einer gröberen Körnung als das übrige Verschleißfutter (26) besteht, wobei die gröbere Körnung auch nach einer Versinterung/Verfrittung ein offenes Porennetz aufweist.

17. Boden- oder Wandausbildung nach einem der Ansprüche 1 bis 16, wobei der unmittelbar oberhalb der Gasspüleinrichtung (14, 14a-e) verlaufende Abschnitt des Verschleißfutters (26) aus einer Masse der Körnung 3 bis 8 mm besteht.

18. Boden- oder Wandausbildung nach einem der Ansprüche 1 bis 17, bei der die Gasspüleinrichtung (14) aus einem Gasspülstein mit gerichteter Porosität besteht.

19. Boden- oder Wandausbildung nach Anspruch 18, bei der der Gasspülstein einen, von einem Rohr gebildeten axialen mittigen Gaskanal und ein, das Rohr im Abstand umgreifendes äußeres Rohr aufweist, wobei die Rohre unter Ausbildung eines zwischen ihnen verlaufenden Ringspaltes lagepositioniert sind, und das innere Rohr beziehungsweise der Ringspalt an getrennte Gaszuführleitungen anschließbar sind.

20. Boden- oder Wandausbildung nach Anspruch 18 oder 19, bei der der Gasspülstein einen, von einem Rohr gebildeten axialen mittigen Gaskanal und ein, das Rohr im Abstand umgreifendes äußeres Rohr aufweist, wobei die Rohre unter Ausbildung eines zwischen ihnen verlaufenden Ringspaltes lagepositioniert sind, sowie mit einer Vielzahl von im wesentlichen parallel zu den Rohren verlaufenden Durchgangskanälen durch das Matrixmaterial des Spülsteins ausgebildet ist, die statistisch um die Rohre herum verteilt verlaufen und an der, der Metallschmelze abgewandten Seite in eine Gasverteilkammer münden, wobei die Gasverteilkammer, der Ringkanal und der durch das Rohr gebildete Gaskanal gegeneinander abgedichtet und an getrennte Gaszuführleitungen anschließbar sind.

21. Boden- oder Wandausbildung nach einem der Ansprüche 1 bis 18, bei der die Gasspüleinrichtung (14, 14a-e) als Rohrsystem mit einer Vielzahl von Gasaustrittsöffnungen (17) ausgebildet ist.

22. Boden- oder Wandausbildung nach einem der Ansprüche 1 bis 18, bei der die Gasspüleinrichtung (14, 14a-e) als großflächiger Hohlkasten ausgebildet ist, in den an einer Stelle die Gaszuführleitung (12) einmündet und der auf seiner - in Richtung der Gasströmung - oberen Abdeckfläche mit einer Vielzahl von Gasaustrittsöffnungen (17) ausgebildet ist.

23. Boden- oder Wandausbildung nach Anspruch 21 oder 22, bei der die Gasspüleinrichtung (14, 14a-e) (das Rohrsystem, der Hohlkasten) mit einer grobkörnigen, feuerfesten Schüttmasse (9) gefüllt ist.

24. Boden- oder Wandausbildung nach einem der Ansprüche 1 bis 23, bei der die Gasspüleinrichtung (14, 14a-e) direkt auf dem metallischen Mantel (10) des Gefäßes oder auf dem Dauerfutter (20) aufsteht.

25. Verwendung einer Boden- oder Wandausbildung nach einem der Ansprüche 1 bis 24 in einem Elektro-Lichtbogenofen.

## Claims

1. Bottom or wall structure for a metallurgical vessel with a refractory lining (20, 26), which is adjacent to an outer metallic envelope (10) of the vessel and which has -- on the side facing away from the metallic envelope (10) -- a wear lining (26), which is permeable to gas in at least some of its sections, and which covers with its gas-permeable section at least one gas purging device (14, 14a-e) with an associated gas feed line (12),
**characterized in that**
the gas purging device (14, 14a-e) is surrounded circumferentially and possibly also on the bottom side by a gastight receptacle (18, 18′, 18˝), which projects over the gas purging device (14, 14a-e) in the upward direction into the area of the wear lining (26), wherein the area of the gas-permeable wear lining surrounded by the receptacle is free of baffle plates.

2. Bottom or wall structure in accordance with claim 1, in which the receptacle (18, 18′, 18˝) consists of a box- or cylinder-shaped component, which is open or at least permeable to gas in the direction of the wear lining (26).

3. Bottom or wall structure in accordance with claim 1 or 2, in which the receptacle (18, 18′, 18˝) is surrounded circumferentially by a gastight, refractory mass (24), which extends between a permanent lining (20) and the wear lining (26) of the lining.

4. Bottom or wall structure in accordance with claim 3, in which the thickness of the refractory mass (24) (viewed in the direction of the gas flow) corresponds to 0.1 to 0.5 times the height of the gas purging device (14, 14a-e), and the width of the refractory mass (24) (viewed radially to the direction of the gas flow) corresponds to 0.5 to 5 times the height of the gas purging device (14, 14a-e).

5. Bottom or wall structure in accordance with one of the claims 3 or 4, in which the refractory mass (24) is limited circumferentially by a gastight ring, which extends, starting from the permanent lining, via the receptacle and the refractory lining and into the wear lining.

6. Bottom or wall structure in accordance with one of the claims 1 through 5, in which a gastight, refractory mass, which extends between the permanent lining and the wear lining, is provided between the gas purging device and the receptacle.

7. Bottom or wall structure in accordance with one of the claims 1 through 6, in which the receptacle (18, 18′, 18˝) and/or the ring (22) consist(s) of a monolithic component.

8. Bottom or wall structure in accordance with one of the claims 1 through 6, in which the receptacle (18, 18′, 18˝) and/or the ring (22) is (are) formed by a row of bricks assembled from discrete refractory elements.

9. Bottom or wall structure in accordance with one of the claims 1 through 6, in which the receptacle (18, 18′, 18˝) and/or the ring (22) consist of a metallic material.

10. Bottom or wall structure in accordance with one of the claims 5 through 9, in which the receptacle (18, 18′, 18˝) and/or the ring (22) extend into the wear lining (26) over up to 2/3 of the thickness of the wear lining (26).

11. Bottom or wall structure in accordance with one of the claims 1 through 10, in which the mass (24), the receptacle (18, 18′, 18˝) and/or the ring (22) consists (consist) of a chemically or carbon-bound ceramic grade.

12. Bottom or wall structure in accordance with claim 11, in which the mass (24), the receptacle (18, 18′, 18˝), and/or the ring (22) consists (consist) of a pitch- or tar-bound ceramic grade.

13. Bottom or wall structure in accordance with one of the claims 1 through 12, in which the mass (24), the receptacle (18, 18′, 18˝), and/or the ring (22) consists (consist) of a magnesitic grade.

14. Bottom or wall structure in accordance with one of the claims 1 through 13, in which the permanent lining (20) consists of magnesite.

15. Bottom or wall structure in accordance with one of the claims 1 through 14, in which the wear lining (26) consists of a dry monolithic lining material made of sintered magnesia with an MgO content exceeding 50 wt.%.

16. Bottom or wall structure in accordance with one of the claims 1 through 15, in which the section of the wear lining (26) extending directly above the gas purging device (14, 14a-e) consists of coarser granular material than the rest of the wear lining (26), wherein the coarser granular material has a network of open pores even after sintering/fritting.

17. Bottom or wall structure in accordance with one of the claims 1 through 16, in which the section of the wear lining (26) extending directly above the gas purging device (14, 14a-e) consists of a mass with a particle size of 3 to 8 mm.

18. Bottom or wall structure in accordance with one of the claims 1 through 17, in which the gas purging device (14) consists of a gas purging plug with directed porosity.

19. Bottom or wall structure in accordance with claim 18, in which the gas purging plug has an axial central gas channel formed by a pipe and an outer pipe surrounding the pipe at a spaced location, wherein the pipes are positioned such that they form an annular gap extending between them, and the inner pipe and the annular gap can be connected to separate gas feed lines.

20. Bottom or wall structure in accordance with claim 18 or 19, in which the gas purging plug has an axial central gas channel formed by a pipe and an outer pipe surrounding the pipe at a spaced location, wherein the pipes are positioned such that they form an annular gap extending between them, and it [the gas purging plug] is provided with a plurality of flow channels through the matrix material of the purging plug, which extend essentially in parallel to the pipes, distributed statistically around the pipes, and open into a gas distribution chamber on the side facing away from the metal melt, wherein the gas distribution chamber, the annular channel, and the gas channel formed by the pipe are sealed off against each other and can be connected to separate gas feed lines.

21. Bottom or wall structure in accordance with one of the claims 1 through 18, in which the gas purging device (14, 14a-e) is designed as a system of pipes with a plurality of gas outlets (17).

22. Bottom or wall structure in accordance with one of the claims 1 through 18, in which the gas purging device (14, 14a-e) is designed as a large-surface-area hollow box, into which the gas feed line (12) opens at a point, and which is provided with a plurality of gas outlets (17) on its cover side, which is its top side in the direction of the gas flow.

23. Bottom or wall structure in accordance with claim 21 or 22, in which the gas purging device (14, 14a-e) (the system of pipes, the hollow box) is filled with a coarse granular, refractory bulk material (9).

24. Bottom or wall structure in accordance with one of the claims 1 through 23, in which the gas purging device (14, 14a-e) stands directly on the metallic envelope (10) of the vessel or on the permanent lining (20).

25. Use of a bottom or wall structure in accordance with one of the claims 1 through 24 in an electric arc furnace.

## Revendications

1. Structure de fond ou de paroi, pour un récipient métallurgique comportant un revêtement (20, 26) réfractaire, adjacent à une enveloppe métallique (10) extérieure du récipient et présentant, du côté opposé à l'enveloppe métallique (10), une garniture d'usure (26), perméable aux gaz, au moins par zones, et recouvrant, par sa zone perméable aux gaz, au moins un dispositif de rinçage au gaz (14, 14a à e) équipé d'une conduite d'amenée de gaz (12), caractérisée en ce que le dispositif de rinçage au gaz (14, 14a à e) est entouré en périphérie et, le cas échéant, côté fond, d'un réceptacle (18, 18′, 18˝) étanche au gaz, dépassant du dispositif de rinçage au gaz (14, 14a à d) vers le haut, jusqu'à la zone de la garniture d'usure (26), la zone entourée par le réceptacle de la garniture d'usure perméable aux gaz étant exempte de tôles conductrices.

2. Structure de fond ou de paroi selon la revendication 1, dans laquelle le réceptacle (18, 18′, 18˝) est composé d'un élément de construction en caisson ou de forme cylindrique, ouvert, ou au moins perméable aux gaz, en direction de la garniture d'usure (26).

3. Structure de fond ou de paroi selon la revendication 1 ou 2, dans laquelle le réceptacle (18, 18′, 18˝) est entouré en périphérie par une masse réfractaire (24) étanche, s'étendant entre une garniture permanente (20) et la garniture d'usure (26) du revêtement.

4. Structure de fond ou de paroi selon la revendication 3, dans laquelle l'épaisseur de la masse réfractaire (24) observée dans la direction de l'écoulement de gaz, correspond à 0,1 à 0,5 fois la hauteur du dispositif de rinçage au gaz (14, 14a à e) et la largeur de la masse réfractaire (24) observée radialement par rapport à la direction de l'écoulement de gaz, correspond de 0,5 à 5 fois la hauteur du dispositif de rinçage au gaz (14, 14a à e).

5. Structure de fond ou de paroi selon l'une des revendications 3 ou 4, dans laquelle la masse réfractaire (24) est délimitée en périphérie par un anneau étanche aux gaz, s'étendant à partir de la garniture permanente en dépassant en hauteur le réceptacle et la masse réfractaire jusqu'à la garniture d'usure.

6. Structure de fond ou de paroi selon l'une des revendications 1 à 5, dans laquelle une masse réfractaire étanche, s'étendant entre la garniture permanente et la garniture d'usure, est prévue entre le dispositif de rinçage au gaz et le réceptacle.

7. Structure de fond ou de paroi selon l'une des revendications 1 à 6, dans laquelle le réceptacle (18, 18′, 18˝ ) et/ou l'anneau (22) est (sont) réalisé(s) à partir d'un élément de construction monolithique.

8. Structure de fond ou de paroi selon l'une des revendications 1 à 6, dans laquelle le réceptacle (18, 18′ 18˝) et/ou l'anneau (22) est (sont) formé(s) par une rangée de briques confectionnées à partir d'éléments discrets, réfractaires.

9. Structure de fond ou de paroi selon l'une des revendications 1 à 6, dans laquelle le réceptacle (18, 18′, 18˝) et/ou l'anneau (22) est (sont) réalisé(s) à partir d'un matériau métallique.

10. Structure de fond ou de paroi selon l'une des revendications 5 à 9 dans laquelle le réceptacle (18, 18′, 18˝) et/ou l'anneau (22) s'étendent dans la garniture d'usure (26) jusqu'aux 2/3 de son épaisseur.

11. Structure de fond ou de paroi selon l'une des revendications 1 à 10, dans laquelle la masse (24), le réceptacle (18, 18′, 18˝) et/ou l'anneau (22) est (sont) réalisé(s) à partir d'une qualité de céramique faisant intervenir une liaison chimique ou carbonée.

12. Structure de fond ou de paroi selon la revendication 11, dans laquelle la masse (24), le réceptacle (18, 18′, 18˝) et/ou l'anneau (22) est (sont) réalisé(s) à partir d'une qualité de céramique faisant intervenir une liaison par de la poix ou du goudron.

13. Structure de fond ou de paroi selon l'une des revendications 1 à 12, dans laquelle la masse (24), le réceptacle (18, 18′, 18˝) et/ou l'anneau (22) est (sont) réalisé (s) à partir d'une qualité magnésitique.

14. Structure de fond ou de paroi selon l'une des revendications 1 à 13, dans laquelle la garniture permanente (20) est en magnésite.

15. Structure de fond ou de paroi selon l'une des revendications 1 à 14, dans laquelle la garniture d'usure (20) est réalisée à partir d'une masse damée sèche, en magnésie frittée, à teneur en MgO supérieure à 50 % en poids.

16. Structure de fond ou de paroi selon l'une des revendications 1 à 15, dans laquelle la zone, s'étendant directement au-dessus du dispositif de rinçage au gaz (14, 14a à e), de la garniture d'usure (26) est de granulométrie plus grossière que le reste de la garniture d'usure (26), la granulométrie grossière présentant également un réseau de pores ouvert une fois une vitrification/un frittage effectué.

17. Structure de fond ou de paroi selon l'une des revendications 1 à 16, dans laquelle la zone, s'étendant directement au-dessus du dispositif de rinçage au gaz (14, 14a à e), de la garniture d'usure (26) est composée d'une masse de granulométrie comprise dans la plage allant de 3 à 8 mm.

18. Structure de fond ou de paroi selon l'une des revendications 1 à 18, dans laquelle le dispositif de rinçage au gaz (14) est composé d'une brique de rinçage au gaz à porosité orientée.

19. Structure de fond ou de paroi selon la revendication 18, dans laquelle la brique de rinçage au gaz présente un canal central axial, constitué par un tube, et un tube extérieur, entourant à distance le premier tube, les tubes étant positionnés en constituant un interstice annulaire s'étendant entre eux et le tube intérieur, respectivement l'interstice annulaire, pouvant être raccordés à des conduites d'amenée de gaz séparées.

20. Structure de fond ou de paroi selon la revendication 18 ou 19, dans laquelle la brique de rinçage au gaz présente un canal central axial, constitué par un tube, et un tube extérieur, entourant à distance le premier tube, les tubes étant positionnés en constituant un interstice annulaire s'étendant entre eux, ainsi qu'avec une pluralité de canaux de passage, s'étendant sensiblement parallèlement aux tubes et formés à travers le matériau de matrice de la brique de rinçage, distribués autour des tubes selon une distribution statistique, et débouchant, du côté opposé au métal en fusion, dans une chambre de distribution de gaz, la chambre de distribution de gaz; le canal annulaire et le canal à gaz, constitué par le tube, étant isolés les uns des autres de façon étanche et pouvant être raccordés à des conduites d'amenée de gaz séparées.

21. Structure de fond ou de paroi selon l'une des revendications 1 à 18, dans laquelle le dispositif de rinçage au gaz (14, 14a à e) est réalisé sous forme de système tubulaire, comportant une pluralité d'orifices de sortie de gaz (17).

22. Structure de fond ou de paroi selon l'une des revendications 1 à 18, dans laquelle le dispositif de rinçage au gaz (14, 14a à e) est réalisé sous forme de caisson creux à grande surface, dans lequel la conduite d'amenée de gaz (12) débouche en un endroit et dont la surface de recouvrement est réalisée en position supérieure -dans la direction de l'écoulement du gaz- avec une pluralité d'orifices de sortie de gaz (17).

23. Structure de fond ou de paroi selon la revendication 21 ou 22, dans laquelle le dispositif de rinçage au gaz (14, 14a à e) est rempli (le système tubulaire, le caisson creux) d'une masse de remplissage (9) réfractaire, à granulométrie grossière.

24. Structure de fond ou de paroi selon l'une des revendications 1 à 23, dans laquelle le dispositif de rinçage au gaz (14, 14a à e) repose directement sur l'enveloppe métallique (10) du récipient ou sur la garniture permanente (20).

25. Utilisation d'une structure de fond ou de paroi selon l'une des revendications 1 à 24, dans un four à arc électrique.
